# EUROPÄISCHE PATENTSCHRIFT

(11) **EP 4 115 584 B1**
(45) Veröffentlichungstag und Bekanntmachung des Hinweises auf die Patenterteilung: **08.05.2024**
(21) Anmeldenummer: 21719849.8
(22) Anmeldetag: 02.03.2021
(51) Int. Cl.: H04L 9/40

(54) **GESICHERTER UND DOKUMENTIERTER SCHLÜSSELZUGRIFF DURCH EINE ANWENDUNG**
SECURE AND DOCUMENTED KEY ACCESS BY AN APPLICATION
ACCÈS SÉCURE ET DOCUMENTÉ D'UNE APPLICATION À UNE CLÉ

(30) Priorität: 06.03.2020 DE 102020202882
(43) Veröffentlichungstag der Anmeldung: 11.01.2023
(73) Patentinhaber: Robert Bosch GmbH, 70469 Stuttgart (DE)
(72) Erfinder: BURGER-SCHEIDLIN, Christoph, 81667 München (DE); HELBIG, Kai, 04109 Leipzig (DE); EBKE, Johannes, 81669 München (DE)
(86) Internationale Anmeldenummer: PCT/DE2021/100208
(87) Internationale Veröffentlichungsnummer: WO 2021/175371

(56) Entgegenhaltungen:
- US-A1- 2017 257 345
- US-A1- 2019 097 814

## Beschreibung

Die vorliegende Erfindung betrifft ein Verfahren zur Identifizierung einer Anwendung gegenüber einem weiteren Kommunikationsteilnehmer und ein Verfahren zur Authentifizierung einer anfragenden Anwendung in einem Kommunikationsteilnehmer, sowie eine Recheneinheit und ein Computerprogramm zu dessen Durchführung.

### Stand der Technik

In US 2019/097814 A1 ist eine Anwendung zur Implementierung einer sicheren Verbindung zwischen einer Anwendung auf einem mobilen Gerät und einer Anwendung auf einem lokalen Gerät, unter Verwendung eines Zertifikats des mobilen Geräts.

In US 2017/0257345 A1 ist ein Verfahren beschrieben, bei dem eine Rechner-plattform eines Fahrzeugs von einer mobilen Anwendung, die auf eine sichere Fahrzeugfunktion zugreift, eine Anfrage erhält, um eine sichere Verbindung zwischen der Rechnerplattform und dem mobilen Endgerät zu schaffen, welches die nachfolgenden Schritte umfasst: ein Anwendungszertifikat von der mobilen Anwendung abrufen; Validierung der Erstellung der sicheren Verbindung mit dem Anwendungszertifikat und einem Modulzertifikat aus einer lokalen Richtlinientabelle der Rechner-Plattform.

Verschlüsselte Kommunikation ist ein essentieller Bestandteil moderner, sicherer Kommunikation. In Situationen, in denen sich zuvor unbekannte Kommunikationspartner begegnen, kann Verschlüsselung aber nur dann zur Sicherheit bei tragen, wenn die Identität des Kommunikationspartners sichergestellt werden kann. Ist dies nicht der Fall, kann ein Angreifer sich als Teil einer Kommunikationskette installieren und so die Kommunikation entschlüsseln und mitlesen (M an-in-the-Middle-Angriffe).

Daher werden im modernen Datenverkehr kryptographische Zertifikate verwendet, um den Kommunikationspartner zu identifizieren. Mit einem solchen Zertifikat wird der Eigentümer eines bestimmten kryptographischen öffentlichen Schlüssels und damit des zugehörigen Schlüsselpaars identifiziert. Grundsätzlich ist es möglich, beide Partner einer Kommunikation durch Zertifikate zu validieren. Im World Wide Web wird jedoch in der Regel nur der Server im Web validiert, von den Clients (d.h. vom Browser des Benutzers) wird kein Zertifikat verlangt. Zertifikate werden von speziellen, besonders vertrauenswürdigen Stelle, den Certification Authorities (CA) ausgestellt. Jeder Kommunikationspartner vertraut bestimmten dieser vertrauenswürdigen Stellen und akzeptiert von diesen jedes zeitlich gültige Zertifikat, das bestimmten Kriterien genügt. Zertifikate werden dabei auf Basis einer Anfrage (Certificate Signing Request, CSR) an die vertrauenswürdige Stelle bzw. CA erstellt. Diese Anfrage umfasst Daten über die zu authentifizierende Person bzw. Einheit, z.B. den Namen. Die CA führt auf Basis dieser Daten eine entsprechende Identitätsprüfung durch und erstellt das angeforderte Zertifikat, falls die Prüfung erfolgreich ist. In dem Zertifikat ist der öffentliche Schlüssel der anfragenden Einheit enthalten, wobei das Zertifikat von der vertrauenswürdigen Stelle üblicherweise digital signiert wird. Das ausgestellte Zertifikat kann also anzeigen, dass die vertrauenswürdige Stelle die zu authentifizierende Einheit geprüft hat, so dass alle Kommunikationspartner, die der vertrauenswürdigen Stelle vertrauen, diese Prüfung aufgrund des Zertifikats als erfolgreich betrachten können.

Auch Geräte können auf diese Art und Weise mit Zertifikaten ausgestattet werden. Hierbei können unterschiedliche, zur Identifizierung eines Geräts geeignete Merkmale verwendet werden, z.B. eine Seriennummer. Es ist üblich, dass der Prozess während der Herstellung der Geräte lokal vom Hersteller durchgeführt wird. Dieser hat hierzu ein Herstellerzertifikat mit einer speziellen Berechtigung der Certification Authority erhalten und kann damit gewissermaßen eine lokale vertrauenswürdige Stelle (lokale CA) bilden. Solch ein Gerätezertifikat und der dazugehörige geheime Schlüssel können dann auf das Gerät aufgebracht werden, wobei der geheime Schlüssel auch im Gerät generiert werden kann.

Damit ergibt sich aber bei Geräten, die mit Zusatzkomponenten von Dritten versehen sind (z.B. nachträglich installierte Programmmodule bzw. Anwendungen) das Problem, dass zunächst alle oder keine der Anwendungen auf dieses Gerätezertifikat zugreifen können. Es gibt keine zusätzliche Information darüber, welche Anwendung auf dem Gerät das Gerätezertifikat nutzt.

Eine Authentifizierung mit Hilfe von Zertifikaten findet üblicherweise am Anfang, in der Regel direkt nach dem Aufbau der Verbindung statt, d.h. im sogenannten Handshake. In diesem Handshake werden die öffentlichen Teile der Zertifikate übermittelt und geprüft. Durch ein Gerätezertifikat findet aber damit nur eine "äu-ßerliche" Prüfung über das Gerät statt.

Darüber hinaus ist bei allen kryptographischen Systemen die Vertraulichkeit der geheimen Schlüssel von grundlegender Bedeutung. Ein Kommunikationspartner ist nur dann vertrauenswürdig, solange der geheime Schlüssel auch geheim bleibt. Zu diesem Zweck kann beispielsweise spezialisierte Hardware verwendet werden, die eine besonders sichere Aufbewahrung der Schlüssel sicherstellen soll. Die Zugriffskontrolle auf die Schlüssel ist insbesondere bei externen Zusatzkomponenten wie externen Anwendungen (Apps) von Bedeutung, da nicht jeder Anwendung gleichermaßen vertraut werden kann. So ist es beispielsweise für eine Anwendung, die Bankgeschäfte tätigen kann, von besonderer Bedeutung, dass keine andere Anwendung auf dem Gerät Zugriff auf den verwendeten geheimen Schlüssel hat.

Zu diesem Zweck kann beispielsweise ein Schlüsselbeglaubigungs-Verfahren (Key Attestation) verwendet werden. Dabei werden Eigenschaften eines generierten Schlüssels bzw. Schlüsselpaares durch Zertifizierung bestätigt. Eine dritte Partei, wie etwa ein Netzwerkdienst, kann sich dann davon überzeugen, dass ein Schlüssel in einem sicheren Hardwarebaustein aufbewahrt wird und dass nur eine Anwendung Zugriff auf den Schlüssel hat. Dabei kann die Beglaubigung des erzeugten Schlüssels durch eine vertrauenswürdige Komponente durchgeführt werden, die in der Regel vom Hersteller des Gerätes stammt. Diese vertrauenswürdige Komponente zertifiziert eine genaue Beschreibung des zugehörigen geheimen Schlüssels, dessen Zugangskontrollen, dessen Aufbewahrung in sicherer Hardware, sowie gegebenenfalls eine "Attestation Challenge" des Netzwerkdienstes in einem Beglaubigungszertifikat bzw. "Attestation Certificate". Die so ausgestellten Zertifikate sind jedoch nicht geeignet, um als Beweis einer Identität für externe Dienste akzeptiert zu werden, da das Zertifikat auf dem Gerät keiner lokalen Zertifizierungsstelle entspricht.

Es ist darüber hinaus beispielsweise möglich, wie in der DE 102015201599 A1 ein System zu implementieren, in dem eine Recheneinrichtung das Verhalten von installierten Programmmodulen überwacht, z.B. die Kommunikation nach außen und die Verwendung von Nutzerdaten. Zu diesem Zweck wird die Recheneinrichtung selbst als vertrauenswürdig und korrekt funktionierend zertifiziert, indem von einer entsprechenden Zertifizierungsstelle ein Zertifikat für die Recheneinrichtung angefordert wird. Dazu sind aber beispielsweise umfangreiche Überprüfungsmechanismen durch die Recheneinheit erforderlich.

### Offenbarung der Erfindung

Die Erfindung betrifft ein Verfahren, ein Verfahren, eine Recheneinheit und ein Computerprogramm nach den Ansprüchen 1, 9, 12 bzw. 13. Die abhängige Ansprüche betreffen vorteilhafte Weiterbildungen.

Kurze Beschreibung der Zeichnungen
Figur 1 zeigt ein beispielhaftes System, in dem Ausführungsformen der Erfindung verwendet werden können;
Figur 2 zeigt einen beispielhaften Verfahrensablauf in einer Vorrichtung gemäß einer Ausführungsform der Erfindung; und
Figur 3 zeigt einen beispielhaften Verfahrensablauf in einem Kommunikationsteilnehmer, der eine Verbindung mit der Vorrichtung aus Figur 2 aufbaut.

### Ausführungsformen der Erfindung

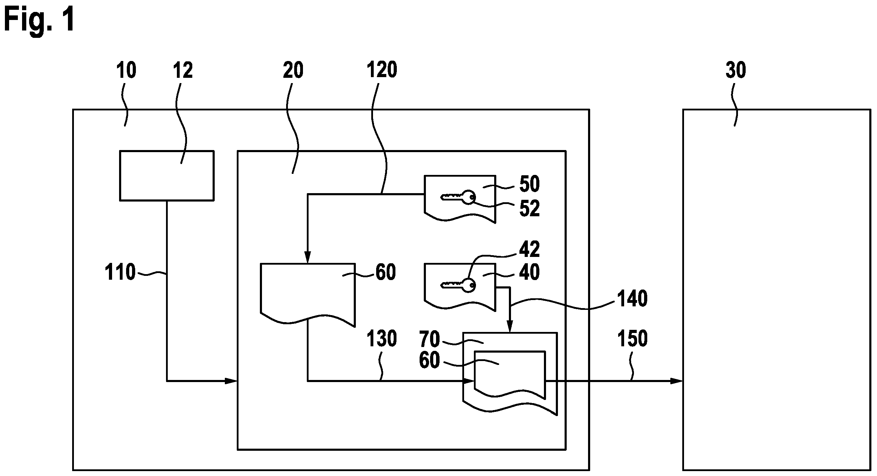

In Figur 1 sind schematisch Elemente eines beispielhaften Systems gezeigt, in dem Ausführungsformen der Erfindung angewendet werden können.

Dabei ist in einer Vorrichtung 10 unter anderem eine Recheneinheit (nicht gezeigt) zum Ausführen von Programmmodulen, die in flüchtigen oder nicht flüchtigen Speicherelementen abgespeichert sind, vorhanden. Die Recheneinheit kann beispielsweise einer oder mehrere geeignete Prozessoren umfassen. Darüber hinaus können verschiedenste Schnittstellen wie etwa Nutzerschnittstellen zur Anzeige und Eingabe von Daten, Kommunikationsschnittstellen für lokale oder entfernte Verbindungen und weitere vorhanden sein. Die Vorrichtung kann beispielsweise ein Nutzerendgerät wie ein Computer, Mobiltelefon, Smartphone, Tablet sein, oder auch jedes andere beliebige Gerät, das eine Kommunikationsschnittstelle aufweist und daher eine Möglichkeit zur sicheren Kommunikation z.B. mit Diensten in einem lokalen oder erweiterten Netzwerk benötigt, wie etwa Smart-Home-Geräte bzw. Geräte im "Internet of Things" (loT), vernetzte Fahrzeuge und viele weitere. Ebenso denkbar ist eine Anwendung im industriellen Kontext, wo zunehmend Produktionsmaschinen, Fertigungseinrichtungen, Roboter, teilautonome Systeme und andere Einheiten lokal oder global vernetzt sind und durch herstellerseitige oder vom Endkunden selbst bereitgestellte Zusatzanwendungen später erweiterbar sind. Besonders vorteilhaft ist der Einsatz in Kontext einer offenen Plattform, in der die Zusatzanwendungen weder direkt durch den Hersteller, noch den Endkunden bereitgestellt werden und somit nicht für ein spezielles Gerät angepasst werden können.

In der Vorrichtung 10 können auf übliche Weise verschiedene Anwendungen oder Programmmodule 12 zum Ausführen bestimmter Funktionen vorhanden sein, wobei die Anwendungen 12 durch den Hersteller der Vorrichtung aufgebracht sein können und/oder nachträglich auf die Vorrichtung 10 aufgebracht sein können, z.B. durch spätere Installation durch einen Nutzer.

Auf der Vorrichtung kann sich ein gerätespezifisches Zertifikat 40 befinden, welches bevorzugt vom Hersteller bzw. während der Fertigung oder Erstinstallation der Vorrichtung aufgebracht wurde. Das gerätespezifische Zertifikat 40 kann im Sinne eines Public-Key-Zertifikats mit einem öffentlichen Schlüssel eines asymmetrischen kryptographischen Schlüsselpaars 42 verknüpft sein, wobei der geheime Schlüssel des Schlüsselpaars in einer speziellen Hardwarekomponente gespeichert sein kann, die besondere Sicherheit bieten kann. Beispielsweise kann Zugriff auf diese Hardwarekomponente auf vorgegebene, vertrauenswürdige Software beschränkt sein.

Weiter kann die Vorrichtung ein vertrauenswürdiges Modul 20 umfassen. Das vertrauenswürdige Modul 20 kann beispielsweise ein Betriebssystem der Vorrichtung 10 sein, oder ein parallel zum Betriebssystem laufendes, abgegrenztes System, aber auch ein innerhalb eines Betriebssystem eingebrachtes vertrauenswürdiges Programmmodul. Dabei kann das vertrauenswürdige Modul vollständig auf Software basieren oder kann in Zusammenhang mit bestimmter Hardware der Vorrichtung ausgeführt sein, beispielsweise einer speziellen sicheren Umgebung.

Dieses vertrauenswürdige Modul 20 kann den Zugriff auf das gerätespezifische Zertifikat 40 und alle dazugehörigen kryptographischen Operationen kontrollieren. Dies bedeutet, dass insbesondere die Signatur von Daten, die unter Verwendung des geheimen Schlüssels des mit dem gerätespezifischen Zertifikat 40 verknüpften Schlüsselpaars stattfinden, kontrolliert werden. Eine Verbindung bzw. Kommunikation mit einem Kommunikationsteilnehmer oder Dienst, z.B. einem Netzwerkdienst, welche das gerätespezifische Zertifikat 40 und/oder seine zugehörigen Schlüssel 42 verwenden soll, kann damit so eingeschränkt sein, dass sie nur unter Einbeziehung des vertrauenswürdigen Moduls 20 möglich ist. Ebenso kann jede beliebige Anwendung der zugehörigen Schlüssel 42 (z.B. die Signatur von Daten für andere Einheiten) nur unter Verwendung des vertrauenswürdigen Moduls 20 möglich sein.

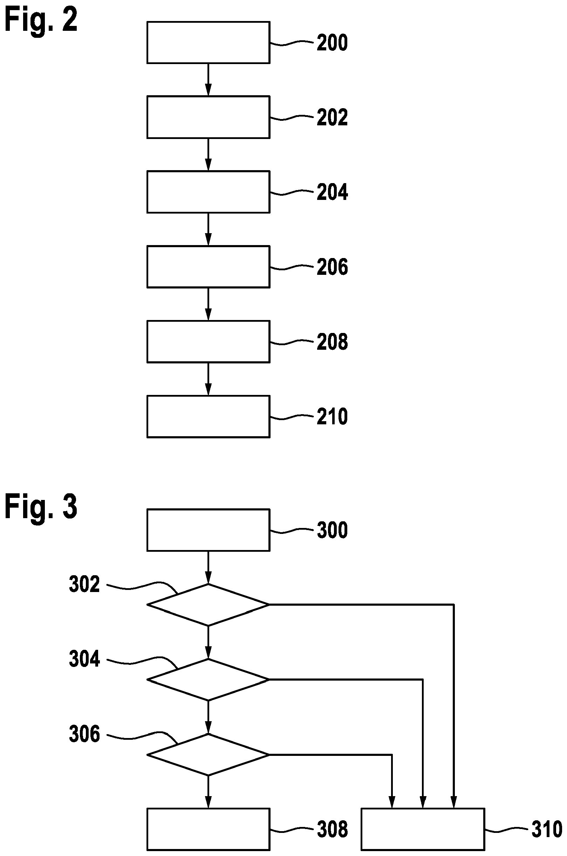

Mögliche Verfahrensschritte werden nun zusätzlich unter Bezug auf den in Figur 2 dargestellten Ablauf beschrieben.

Dabei kann in Schritt 110 bzw. 200 eine Anwendung der Vorrichtung eine initiale Verbindungsanfrage für eine Verbindung zu einem Kommunikationsteilnehmer erstellen. Soweit die Anwendung das gerätespezifische Zertifikat bzw. die zugehörigen Schlüssel anwenden will, kann die Verbindungsanfrage daher an das vertrauenswürdige Modul richten und dabei z.B. Verbindungsdaten für den Kommunikationsteilnehmer mit angeben, wie etwa eine Netzwerkadresse. Außerdem können in der Verbindungsanfrage Daten an das vertrauenswürdige Modul weitergegeben werden, die in einer Verbindungsanfrage und/oder einer späteren Verbindung mit dem Kommunikationsteilnehmer übersendet werden sollen.

Das vertrauenswürdige Modul 20 ist weiter in der Lage, von einer Anwendung der Vorrichtung, die eine Verbindung unter Einbeziehung des vertrauenswürdigen Moduls aufbauen möchte, verschiedene Informationen zu sammeln. Dabei kann es sich beispielsweise um eine Seriennummer der Anwendung oder um eine andere Kennung, die auch eine eindeutige Kennung sein kann, um Lizenzierungsdaten, oder um weitere Informationen handeln. Zusätzlich kann das vertrauenswürdige Modul 20 in diesem Schritt auch gerätespezifische Merkmale und Informationen über den Zustand der Vorrichtung, auf der das Modul und die Anwendung aufgebracht sind, sammeln, wie etwa Informationen darüber, ob Firmware und/oder Systemdateien nicht modifiziert wurden, eine Seriennummer oder Typennummer des verwendeten Geräts, Informationen über vorhandene Einrichtungen und Schnittstellen, Informationen über sichere Hardwarekomponenten und weitere. Dabei können diese Informationen, insbesondere die Informationen einer Vorrichtung, zumindest teilweise auch durch bzw. in dem vertrauenswürdigen Modul 20 abgespeichert sein und in mehreren Verbindungsanfragen verwendet werden. Alternativ können die Informationen zumindest teilweise bei jedem Verbindungsaufbau über das vertrauenswürdige Modul neu gesammelt werden. Damit kann beispielsweise sichergestellt werden, dass die Anwendung seit einem letzten Verbindungsaufbau nicht modifiziert wurde. Die gesammelten Informationen können dann in Schritt 202 zu einem Informationselement verarbeitet werden, welches diese Informationen oder zumindest einen Teil davon enthält.

Darüber hinaus kann das vertrauenswürdige Modul 20 über ein Informationszertifikat 50 mit zugehörigen Schlüsseln verfügen. Bevorzugt handelt es sich bei diesem Informationszertifikat 50 um ein anderes Zertifikat als das gerätespezifische Zertifikat 40. Insbesondere kann das Informationszertifikat 50 von einer dritten Partei ausgestellt sein, z.B. einer geeigneten vertrauenswürdigen Stelle oder Zertifizierungsstelle, welche die Integrität des vertrauenswürdigen Moduls 20 bestätigen kann. Optional kann das Informationszertifikat auch beispielsweise vom Hersteller der Vorrichtung ausgegeben werden. Dieses Informationszertifikat 50 kann unter anderem dazu vorgesehen sein, Informationen, die von dem vertrauenswürdigen Modul bereitgestellt werden, zu validieren bzw. zu bestätigen und schützen. Mit dem speziellen, geheimen Schlüssel 52, der durch das Informationszertifikat 50 zertifiziert ist, kann nun in Schritt 120 das gebildete Informationselement signiert werden.

Das vertrauenswürdige Modul 20 kann dann die zusammengestellten Informationen 60 über die Anwendung und/oder die Vorrichtung, die mit dem Schlüssel 52 des Informationszertifikats 50 signiert wurden, in Schritt 130 bzw. 206 in eine Verbindungsanfragenachricht 70 einbetten und diese Verbindungsanfragenachricht unter Verwendung des gerätespezifischen Zertifikats (bzw. mit dem zugehörigen geheimen Schlüssel 42) in Schritt 140 bzw. 208 signieren. Die Verbindungsanfragenachricht 70 kann dann dem Kommunikationsteilnehmer 30, zu dem die Anwendung 12 eine Verbindung aufbauen möchte, die Verbindungsanfragenachricht 70 mit den eingebetteten und signierten Informationen 60 in Schritt 210 zusenden, beispielsweise als Teil eines Handshakes. Grundsätzlich können die signierten Informationen 60 alternativ auch zu einem anderen, späteren Zeitpunkt an den Kommunikationsteilnehmer 30 gesendet werden.

Damit kann der zweite Kommunikationsteilnehmer einerseits Informationen über die Anwendung erhalten und prüfen, ob diese bestimmten Voraussetzungen genügen, und kann gleichzeitig sicherstellen, dass diese erhaltenen Informationen über die Anwendung von dem vertrauenswürdigen Modul stammen und damit als zuverlässig eingestuft werden können.

Figur 3 zeigt einen beispielhaften Verfahrensablauf in einem weiteren Kommunikationsteilnehmer 30, z.B. in einem Netzwerkdienst, der in einem Handshake eine Verbindung mit der Vorrichtung 10 zur Kommunikation mit der Anwendung 12 aufbaut.

Dabei kann der weitere Kommunikationsteilnehmer 30 zunächst die von dem vertrauenswürdigen Modul 20 erhaltene Verbindungsanfragenachricht in Schritt 300 empfangen. Die Verbindungsanfrage kann beispielsweise über einen geeigneten Header als solche gekennzeichnet sein, wobei auch Elemente dazu dienen können, auf das gesicherte Authentifizierungsverfahren hinzuweisen. Der Kommunikationsteilnehmer kann dann in Schritt 302 die Signatur der Verbindungsanfragenachricht sowie in Schritt 304 die Signatur des darin eingebetteten Informationselements prüfen.

Zu diesem Zweck können dem Kommunikationsteilnehmer 30 die entsprechenden Zertifikate, beispielsweise das Zertifikat des vertrauenswürdigen Moduls, verschiedene Herstellerzertifikate oder Zertifikate von Certification Authorities zum Abgleich gespeichert vorliegen. Alternativ kann auch eine Möglichkeit für den Kommunikationsteilnehmer bestehen, die erforderlichen Zertifikate von einer anderen Stelle zu erhalten, und/oder mindestens das Zertifikat des vertrauenswürdigen Moduls kann mit der Verbindungsanfragenachricht zusammen von dem Modul selbst empfangen werden. Damit kann sowohl die Vertrauenswürdigkeit des Zertifikats durch den Kommunikationsteilnehmer überprüft werden als auch die Signatur auf Basis des in dem jeweiligen Zertifikat enthaltenen öffentlichen Schlüssels.

Falls die Signaturen erfolgreich geprüft wurden, können nun die in dem Informationselement enthaltenen Daten in Bezug auf die Vorrichtung und/oder die Anwendung extrahiert und in Schritt 306 ausgewertet werden. Dazu können diese beispielsweise mit abgespeicherten Informationen abgeglichen werden. Optional ist auch möglich, dass in diesem Schritt keine gesonderte Validierung dieser Daten mehr stattfindet, sondern dass diese Daten nur zur Verbindung verwendet werden und/oder lokal gespeichert werden, während die Authentifizierung der Anwendung auf den erfolgreich geprüften Signaturen beruht.

Falls der Kommunikationsteilnehmer 30, also z.B. der Netzwerkdienst, dabei zu dem Schluss kommt, dass entweder mindestens eines der verwendeten Zertifikate 40, 50 nicht vertrauenswürdig ist und damit keine geeignete vertrauenswürdige Komponente den Verbindungsaufbau kontrolliert, oder dass Informationen über die Anwendung und/oder die Vorrichtung aus dem Informationselement nicht den eigenen Vorgaben zum Aufbau der Verbindung oder zur Bereitstellung des gewünschten Dienstes entsprechen, kann der Verbindungsaufbau in Schritt 310 beendet werden, wobei optional eine entsprechende Rückmeldung an die Vorrichtung gesendet werden kann.

Ansonsten kann nun die angefragte Verbindung zwischen dem weiteren Kommunikationsteilnehmer 30 und der Anwendung 12 in Schritt 308 erfolgreich aufgebaut werden und beispielsweise zur Bereitstellung von Diensten und zum Austausch von Daten verwendet werden, wobei optional das gerätespezifische Schlüsselpaar als Teil einer beidseitigen kryptographischen Absicherung der weiteren Verbindung verwendet werden kann.

Ebenso können die beschriebenen Verfahrensschritte sowohl auf Seite der Vorrichtung 10 als auch auf Seite des weiteren Kommunikationsteilnehmers 30 eingesetzt werden, wenn ein externer Dienst eine Verbindung zu einer lokalen Anwendung 12 auf der Vorrichtung aufbauen möchte, wenn also die Verbindungsanfrage von dem weiteren Kommunikationsteilnehmer 30 stammt. Auch dann kann das vertrauenswürdige Modul die verschiedenen Informationen über die Anwendung und die Vorrichtung sammeln und ein entsprechend in eine signierte Verbindungsanfragenachricht eingebettetes Informationselement daraus bilden, das von dem anfragenden Kommunikationsteilnehmer ausgewertet werden kann.

Das vertrauenswürdige Modul und/oder der weitere Kommunikationsteilnehmer können dabei beliebige Informationen in Bezug auf die Verbindungsanfrage und die Teilnehmer zur späteren Verarbeitung und Verwendung abspeichern. Beispielsweise können Informationen über die Anwendung, Informationen über den weiteren Kommunikationsteilnehmer, Informationen über die Vorrichtung, ein Zeitstempel der Verbindungsanfrage und/oder Informationen über angewendete kryptographische Informationen sowie über Erfolg oder Fehlschlagen der Verbindungsanfrage abgespeichert werden.

Es versteht sich, dass alle beschriebenen Varianten nur als Beispiele dargestellt wurden und diese unter anderem durch weitere Verfahrensschritte ergänzt werden könnten bzw. einzelne Verfahrensschritte auch ausgelassen werden könnten. Ebenso können die verschiedenen beispielhaften Ausführungsformen und insbesondere ihre einzelnen Bestandteile und Verfahrensschritte auch miteinander kombiniert werden.

## Patentansprüche

1. Verfahren zur Identifizierung einer Anwendung (12), die in einer Vorrichtung (10) ausgeführt wird, gegenüber einem weiteren Kommunikationsteilnehmer, **gekennzeichnet durch** die folgenden Verfahrensschritte:
Erhalten (200) einer Verbindungsanfrage (110) für eine sichere Verbindung zwischen der Anwendung (12) und dem weiteren Kommunikationsteilnehmer (30);
Bilden (202) eines Informationselements, welches mindestens Informationen über die Anwendung (12) umfasst;
Signieren (204) des Informationselements mit einem ersten geheimen Schlüssel (52), der Teil eines kryptographischen asymmetrischen Schlüsselpaars ist, das durch ein von einer externen vertrauenswürdigen Stelle ausgestelltes Informationszertifikat (50) zertifiziert ist;
Einbinden (206) des signierten Informationselements (60) in eine Verbindungsanfragenachricht (70);
Signieren (208) der Verbindungsanfragenachricht (70) mit einem geheimen gerätespezifischen Schlüssel (42), der Teil eines kryptographischen asymmetrischen Schlüsselpaars ist, das durch ein gerätespezifisches Zertifikat (40) der Vorrichtung zertifiziert ist;
Senden (210) der Verbindungsanfragenachricht (70) an den weiteren Kommunikationsteilnehmer.

2. Verfahren nach Anspruch 1, wobei das Informationselement (60) weiter Informationen über die Vorrichtung (10) umfasst, in der die Anwendung ausgeführt wird.

3. Verfahren nach einem der vorhergehenden Ansprüche, wobei der geheime gerätespezifische Schlüssel (42) in einer sicheren Hardwarekomponente der Vorrichtung gespeichert wird.

4. Verfahren nach einem der vorhergehenden Ansprüche, wobei die Verbindungsanfrage (110) von der Anwendung (12) oder von dem weiteren Kommunikationsteilnehmer (30) erhalten wird.

5. Verfahren nach einem der vorhergehenden Ansprüche, wobei die Verfahrensschritte von einem vertrauenswürdigen Modul (20) in der Vorrichtung durchgeführt werden, wobei das Informationszertifikat (50) und die damit verknüpften Schlüssel nur durch das vertrauenswürdige Modul angewendet werden.

6. Verfahren nach Anspruch 5, wobei die kryptographischen Schlüssel (42), die durch ein gerätespezifisches Zertifikat der Vorrichtung zertifiziert sind, nur unter Einbeziehung des vertrauenswürdigen Moduls (20) verwendbar sind.

7. Verfahren nach einem der vorhergehenden Ansprüche, wobei das Informationszertifikat (50) und das gerätespezifische Zertifikat (40) identisch sind.

8. Verfahren nach einem der vorhergehenden Ansprüche, weiter umfassend:
Speichern von Daten in Bezug auf die Verbindungsanfrage, wobei die gespeicherten Daten mindestens eines der folgenden umfassen: Informationen über die Anwendung, Informationen über den weiteren Kommunikationsteilnehmer, Informationen über die Vorrichtung, einen Zeitstempel der Verbindungsanfrage, Informationen über angewendete kryptographische Operationen.

9. Verfahren zur Authentifizierung einer Anwendung, mit der eine sichere Verbindung aufgebaut werden soll, **gekennzeichnet durch** die folgenden Verfahrensschritte:
Empfangen (300) einer Verbindungsanfragenachricht (70);
Prüfen (302) einer gerätespezifischen Signatur, mit der die Verbindunganfragenachricht signiert ist;
Prüfen (304) einer informationsbezogenen Signatur, mit der ein in der Verbindungsanfragenachricht eingebettetes Informationselement signiert ist;
und, falls das Prüfen der Signaturen erfolgreich war, Auswerten (306) von Informationen in Bezug auf die Anwendung, die in dem eingebetteten Informationselement enthalten sind, und Herstellen (308) einer Kommunikationsverbindung mit der Anwendung auf Grundlage der Auswertung.

10. Verfahren nach Anspruch 9, wobei das Auswerten von Informationen des eingebetteten Informationselements einen Abgleich mit abgespeicherten Referenzinformationen umfasst.

11. Verfahren nach Anspruch 9 oder 10, weiter umfassend ein Abbrechen des Verbindungsaufbaus, falls das Prüfen einer Signatur nicht erfolgreich war.

12. Recheneinheit, die dazu eingerichtet ist, alle Verfahrensschritte eines Verfahrens nach einem der vorstehenden Ansprüche durchzuführen.

13. Computerprogramm, das eine Recheneinheit dazu veranlasst, alle Verfahrensschritte eines Verfahrens nach einem der Ansprüche 1 bis 11 durchzuführen, wenn es auf der Recheneinheit ausgeführt wird.

14. Maschinenlesbares Speichermedium mit einem darauf gespeicherten Computerprogramm nach Anspruch 13.

## Claims

1. Method for identifying an application (12) that is executed in an apparatus (10) to another communication participant, **characterized by** the following method steps:
obtaining (200) a connection request (110) for a secure connection between the application (12) and the other communication participant (30);
forming (202) an information element that comprises at least information about the application (12);
signing (204) the information element with a first secret key (52), which is part of a cryptographic asymmetric key pair that is certified by an information certificate (50) issued by an external trusted authority;
incorporating (206) the signed information element (60) into a connection request message (70) ;
signing (208) the connection request message (70) with a secret device-specific key (42) that is part of a cryptographic asymmetric key pair that is certified by a device-specific certificate (40) of the apparatus;
transmitting (210) the connection request message (70) to the other communication participant.

2. Method according to Claim 1, wherein the information element (60) furthermore comprises information about the apparatus (10) in which the application is executed.

3. Method according to either of the preceding claims, wherein the secret device-specific key (42) is stored in a secure hardware component of the apparatus.

4. Method according to one of the preceding claims, wherein the connection request (110) is obtained from the application (12) or from the other communication participant (30).

5. Method according to one of the preceding claims, wherein the method steps are performed by a trusted module (20) in the apparatus, wherein the information certificate (50) and the associated keys are used only by the trusted module.

6. Method according to Claim 5, wherein the cryptographic keys (42) that are certified by a device-specific certificate of the apparatus are able to be used only with the inclusion of the trusted module (20).

7. Method according to one of the preceding claims, wherein the information certificate (50) and the device-specific certificate (40) are identical.

8. Method according to one of the preceding claims, furthermore comprising:
storing data in relation to the connection request, wherein the stored data comprise at least one of the following: information about the application, information about the other communication participant, information about the apparatus, a timestamp of the connection request, information about applied cryptographic operations.

9. Method for authenticating an application with which a secure connection is intended to be set up, **characterized by** the following method steps:
receiving (300) a connection request message (70);
checking (302) a device-specific signature with which the connection request message is signed;
checking (304) an information-related signature with which an information element embedded in the connection request message is signed;
and, if the check on the signatures was successful, evaluating (306) information in relation to the application that is contained in the embedded information element, and establishing (308) a communication connection with the application on the basis of the evaluation.

10. Method according to Claim 9, wherein evaluating information of the embedded information element comprises a comparison with stored reference information.

11. Method according to Claim 9 or 10, furthermore comprising terminating the connection setup if the check on a signature was not successful.

12. Computing unit that is designed to perform all of the method steps of a method according to one of the preceding claims.

13. Computer program that prompts a computing unit to perform all of the method steps of a method according to one of Claims 1 to 11 when it is executed on the computing unit.

14. Machine-readable storage medium with a computer program according to Claim 13 stored thereon.

## Revendications

1. Procédé d'identification d'une application (12) qui est exécutée dans un dispositif (10) auprès d'un autre participant à la communication, le procédé étant **caractérisé par** les étapes suivantes :
recevoir (200) une demande de connexion (110) pour une connexion sécurisée entre l'application (12) et l'autre participant à la communication (30) ;
former (202) un élément d'information qui comprend au moins des informations sur l'application (12) ;
signer (204) l'élément d'information avec une première clé secrète (52) qui fait partie d'une paire de clés cryptographiques asymétriques qui est certifiée par un certificat d'information (50) émis par une autorité de confiance externe ;
intégrer (206) l'élément d'information signé (60) dans un message de demande de connexion (70) ;
signer (208) le message de demande de connexion (70) avec une clé secrète (42) qui est spécifique à l'appareil et qui fait partie d'une paire de clés cryptographiques asymétriques qui est certifiée par un certificat (40) du dispositif qui est spécifique à l'appareil ;
envoyer (210) le message de demande de connexion (70) à l'autre participant à la communication.

2. Procédé selon la revendication 1, l'élément d'information (60) comprenant en outre des informations sur le dispositif (10) dans lequel l'application est exécutée.

3. Procédé selon l'une des revendications précédentes, la clé secrète (42) spécifique à l'appareil étant mémorisée dans un composant matériel sécurisé du dispositif.

4. Procédé selon l'une des revendications précédentes, la demande de connexion (110) étant reçue de l'application (12) ou de l'autre participant à la communication (30).

5. Procédé selon l'une des revendications précédentes, les étapes de procédé étant exécutées par un module de confiance (20) dans le dispositif, le certificat d'informations (50) et les clés qui lui sont associées étant appliqués uniquement par le module de confiance.

6. Procédé selon la revendication 5, les clés cryptographiques (42), qui sont certifiées par un certificat spécifique à l'appareil du dispositif, ne pouvant être utilisées qu'avec l'intégration du module de confiance (20).

7. Procédé selon l'une des revendications précédentes, le certificat d'informations (50) et le certificat (40) spécifique à l'appareil étant identiques.

8. Procédé selon l'une des revendications précédentes, comprenant en outre l'étape suivante :
mémoriser des données liées à la demande de connexion, les données mémorisées comprenant l'un au moins des éléments suivants : des informations sur l'application, des informations sur l'autre participant à la communication, des informations sur le dispositif, un horodatage de la demande de connexion, des informations sur des opérations cryptographiques appliquées.

9. Procédé d'authentification d'une application avec laquelle une connexion sécurisée doit être établie, le procédé étant **caractérisé par** les étapes suivantes :
recevoir (300) un message de demande de connexion (70) ;
vérifier (302) une signature spécifique à l'appareil avec laquelle le message de demande de connexion est signé ;
vérifier (304) une signature relative à l'information avec laquelle une information intégrée dans le message de demande de connexion est signée ;
et, si la vérification des signatures se fait avec succès, évaluer (306) les informations relatives à l'application qui sont contenues dans l'élément d'informations intégré et établir (308) une liaison de communication avec l'application sur la base de l'évaluation.

10. Procédé selon la revendication 9, l'évaluation des informations de l'élément d'informations intégré comprenant une adaptation avec des informations de référence mémorisées.

11. Procédé selon la revendication 9 ou 10, comprenant en outre l'abandon de l'établissement de connexion si la vérification d'une signature n'est pas un succès.

12. Unité de calcul conçue pour exécuter toutes les étapes d'un procédé selon l'une des revendications précédentes.

13. Programme informatique qui amène une unité de calcul à réaliser toutes les étapes d'un procédé selon l'une des revendications 1 à 11 lorsqu'il est exécuté sur l'unité de calcul.

14. Support de stockage lisible par machine sur lequel est mémorisé un programme informatique selon la revendication 13.
